# FASCICULE DE BREVET EUROPEEN

(11) **EP 1 026 561 B1**
(45) Date de publication et mention de la délivrance du brevet: **07.04.2004**
(21) Numéro de dépôt: 00440024.8
(22) Date de dépôt: 27.01.2000
(51) Int. Cl.: G05B 19/042

(54) **Dispositif de programmation horaire de commande de fermeture et/ou d'ouverture d'un système d'occultation ou similaire**
Zeit Programmierungsvorrichtung zur Steuerung der Öffnung und/oder Schliesung eines Verdunkelungssystems
Time programming device for controlling the closing and/or opening of a shading or similar system

(30) Priorité: 02.02.1999 FR 9901267; 01.03.1999 FR 9902600
(43) Date de publication de la demande: 09.08.2000
(73) Titulaire: Bubendorff Volet Roulant Société Anonyme, 68300 Saint-Louis (FR)
(72) Inventeur: Evreux, Gerard, 74130 Ayze (FR); Mansouri, Abdelkader, 68330 Huningue (FR); Bodolec, André, 56259 Saint-Nolf (FR)
(74) Mandataire: Rhein, Alain

(56) Documents cités:
- EP-A- 0 671 676
- EP-A- 0 718 730
- EP-A- 0 843 241
- DE-A- 4 106 033
- DE-A- 4 221 640

## Description

L'invention concerne un dispositif de programmation horaire de commande de fermeture et/ou d'ouverture d'un système d'occultation ou similaire, de type volet roulant, à fonctionnement motorisé, comportant un boîtier de contrôle regroupant au moins un organe de commande à impulsion, de préférence deux, pour la commande d'ouverture et/ou de fermeture dudit système.

La présente invention trouvera son application dans le domaine des systèmes d'occultation, plus généralement de fermeture, de bâtiment. Dans ce contexte, l'invention trouvera un intérêt plus spécialement dans le cadre de la gestion automatisée de l'ouverture et de la fermeture de volets roulants, notamment en vue de réaliser une simulation de présence.

A ce propos, l'utilisation de volets roulants motorisés tend à se généraliser et dans ce contexte l'on a d'ores et déjà imaginé différents dispositifs de commande de fonctionnement de ces volets roulants. En fait, habituellement à chaque volet roulant d'une habitation est associé un boîtier de contrôle regroupant, le plus fréquemment, deux organes de commande, l'un destiné à assurer la commande d'ouverture de ce volet roulant, l'autre la fermeture.

Dans certains cas l'on dispose également d'un boîtier de commande comportant, lui aussi, deux organes de commande par l'intermédiaire desquels l'usager a la possibilité d'agir, simultanément, sur plusieurs volets roulants d'une habitation en vue d'une commande groupée d'ouverture ou de fermeture.

A noter que la liaison entre un boîtier de commande et le ou les volets roulants sur lequel ou lesquels il est amené à agir, peut se faire de manière filaire ou encore par l'intermédiaire d'une transmission non filaire du type radio, infrarouge ou similaire. Cette transmission peut avoir lieu par courant porteur, en utilisant le câblage d'une installation électrique d'un bâtiment.

Le fait que de tels systèmes d'occultation et/ou de fermeture soient motorisés a encore permis d'imaginer la mise en oeuvre de dispositifs de commande de fonctionnement automatisé, c'est à dire sans intervention de l'usager pour assurer une séquence d'ouverture ou de fermeture d'un tel système.

En particulier, l'on connaît le programmateur journalier intégrant une horloge et qui, raccordé à un volet roulant ou à un ensemble de volets roulants, est à même de gérer l'ouverture ou encore la fermeture de ces derniers à une heure bien précise dans la journée, préalablement sélectionnée par l'usager.

Cependant, de tels programmateurs journaliers sont relativement coûteux de sorte qu'il est difficilement imaginable d'en associer un à chaque boîtier de commande d'un volet roulant. En fait, usuellement, un seul programmateur est raccordé à l'unité centrale de la gestion du fonctionnement de l'ensemble des volets roulants d'une habitation ou encore au boîtier de commande permettant de gérer le fonctionnement groupé de ces volets roulants.

Il est évident que la solution précédemment exposée ne permet aucune modularité dans le fonctionnement automatisé de ces volets roulants d'une habitation. En particulier, en cas d'absence de l'usager, celui-ci ne peut assurer l'ouverture que d'une partie des volets roulants de son habitation, ce qui est pourtant bien utile, notamment en été lorsque l'on souhaite garder fermés les volets roulants de certaines fenêtres, particulièrement exposées aux rayons solaires.

De même, en cas d'absence prolongée l'ouverture d'une partie seulement, de ces volets roulants durant certaines périodes de la journée, suffit pour simuler une présence ou encore pour exposer des plantes aux rayonnements solaires.

Parmi les solutions connues antérieurement, l'on citera le document EP-A-0671676 qui concerne un système de contrôle électronique pour volets roulants ou similaire. En fait, il est question, dans ce document, de gérer les fins de courses d'ouverture et de fermeture de volets roulants motorisés comportant une roue codeuse.

Accessoirement, ce document décrit un procédé de programmation horaire d'ouverture et de fermeture de volets roulants faisant appel à un boîtier de commande équipé d'une horloge et d'une pluralité de boutons de commande dont certains permettent d'initialiser ou de clôturer une cession de programmation horaire pendant laquelle deux boutons de commande, intervenant habituellement dans la commande d'ouverture et de fermeture d'un volet roulant, permettent d'incrémenter de manière croissante ou décroissante l'heure qui s'affiche sur un écran.

En somme, il n'est pas mis à profit les moyens existants au niveau d'une unité de gestion du fonctionnement d'un volet roulant motorisé pour assurer son ouverture et sa fermeture selon un cycle horaire programmé, mais d'associer à un boîtier de commande « maître » capable de commander plusieurs volets roulants, une horloge, solution qui n'est autre que celle exposée plus haut.

On connaît encore par le document DE-42 21 640 des moyens de programmation en temps réel de l'heure d'ouverture et de fermeture de volets roulants. En particulier l'on dispose de plusieurs touches pour, selon le cas, commander, manuellement, l'ouverture et la fermeture du volet roulant, assurer la programmation de l'heure d'ouverture ou de fermeture de ce volet roulant un jour donné dans la semaine ou faire en sorte que cette programmation se répète tous les jours de la semaine etc.... A noter d'ailleurs que l'appareil est pourvu d'un compteur prévu pour procéder à un décompte de temps sur sept jours, sachant que ce compteur peut être incrémenté, vers le haut ou vers le bas, d'une heure, tout simplement pour passer de l'heure d'hiver à l'heure d'été et inversement.

En somme, l'appareil dont il est question dans ce document antérieur décrit, là encore, un dispositif de programmation destiné à ajuster l'heure d'ouverture et de fermeture de volets roulants aux habitudes de l'usager. Aussi, la programmation doit intervenir au moment même de la journée où un ou plusieurs volets roulants doivent, selon le cas, s'ouvrir ou se fermer.

Par ailleurs, un autre document EP-A-0843241 décrit un système de programmation en temps réel, c'est-à-dire que par une action spécifique sur le boîtier de commande comportant au moins deux boutons, il est déclenché un chronomètre de sorte que le volet roulant vient à s'ouvrir ou, selon le cas, se fermer à intervalles réguliers de vingt quatre heures.

Il est précisé que le dispositif peut comporter plusieurs chronomètres pour gérer plusieurs cycles d'ouverture ou de fermeture dans une même journée ou encore de manière hebdomadaire.

A propos de la structure du dispositif l'on peut lire dans ce document qu'il comprend un boîtier de commande sur lequel se trouvent trois boutons de commande, le premier pour commander la montée, le deuxième pour commander un arrêt et le troisième pour commander la descente. Ces boutons sont reliés dans le boîtier à l'unité logique de traitement qui comprend une interface d'entrée et sortie, un calculateur, une mémoire RAM, une mémoire ROM, une alimentation et une horloge.

La présente invention se propose d'apporter une solution simple et, donc peu coûteuse, à ce problème de la gestion du fonctionnement automatisé de ces volets roulants ou tout autre système d'occultation et/ou de fermeture d'un bâtiment, en particulier en vue de faire de la simulation de présence.

A cet effet, l'invention concerne un dispositif de programmation horaire de commande de fermeture et/ou d'ouverture d'un système d'occultation ou similaire, de type volet roulant, à fonctionnement motorisé, comportant un boîtier de contrôle regroupant au moins un organe de commande à impulsion, de préférence deux, pour la commande d'ouverture et/ou de fermeture dudit système, caractérisé par le fait qu'il comporte, encore, une unité de gestion du fonctionnement du moteur du système auquel est relié le boîtier de contrôle, de manière filaire ou non, et intégrant au moins une horloge et une mémoire EEPROM raccordée à un microprocesseur programmé pour reconnaître au moins une séquence d'initialisation déterminée, transmise sous forme d'une suite définie d'impulsions sur le ou les organes de commande du boîtier de contrôle et pour permettre la programmation, par rapport à une heure de référence et selon la séquence d'initialisation reconnue, l'heure de commande d'ouverture ou de fermeture du système, en fonction du nombre d'impulsions transmises par l'un au moins des organes de commande, après ladite procédure d'initialisation, chaque impulsion correspondant à un incrément , par rapport à l'heure de référence, d'un temps d'une durée prédéfinie, connue en mémoire.

Il est précisé, que l'horloge dont il est question, ici, doit être interprétée comme un moyen de mesurer le temps, c'est-à-dire dans sa signification la plus large et non comme un dispositif pour afficher l'heure.

En fin de compte, le boîtier de contrôle, accessible à l'usager, garde ses caractéristiques initiales, l'usager ayant, simplement, à connaître un protocole de commande à effectuer au niveau de ce boîtier de contrôle pour assurer la programmation, par rapport à une heure de référence, de l'heure d'ouverture ou de fermeture du système d'occultation, en l'occurrence d'un volet roulant. Dans ce but, celui-ci comporte une unité de gestion du fonctionnement de son moteur, cette unité étant munie d'un simple microprocesseur programmable raccordé à un quartz, définissant l'horloge, ainsi qu'à une mémoire EEPROM.

L'on observera, en particulier, que de nombreux systèmes d'occultation et/ou de fermeture motorisés comportent, déjà, une unité de gestion de fonctionnement de leur moteur et regroupant une mémoire, un microprocesseur et une horloge, ceci en particulier, lorsque la transmission à partir du boîtier de contrôle, s'effectue par ondes radio, infrarouges ou similaires, ou encore par courant porteur. En effet, dans ce type de transmission il est fait appel, très fréquemment, à des unités de cryptage et de décryptage destinées à prévenir les tentatives de piratage. Or, de telles technologies nécessitent, précisément, les moyens préalablement cités.

En somme, la mise en application dans de telles conditions, d'un dispositif de programmation horaire, conforme à l'invention, ne nécessite qu'une programmation adaptée du microprocesseur et de la mémoire associée.

Aussi, il se trouve qu'appliquée à de tels systèmes d'occultation du type volet roulant ou autre, la présente invention n'engendre pas de réel surcoût, tout en offrant à l'utilisateur de nouvelles possibilités de gestion de l'ouverture et de la fermeture automatisée de ces volets roulants, plus particulièrement pour procéder à une simulation de présence.

De plus, ledit boîtier de contrôle sur lequel est à même d'intervenir l'usager, s'il se présente sous forme d'une télécommande sans fil, à alimentation autonome, notamment sous forme de piles, l'absence d'horloge et autre programmateur au niveau de ce boîtier de contrôle conduit à une moindre consommation d'énergie, donc à une plus grande autonomie. C'est d'ailleurs pour répondre à cette contrainte que les solutions antérieurement connues, nécessitent, habituellement, le raccordement d'un tel boîtier de contrôle au secteur d'alimentation en énergie électrique du bâtiment.

L'invention sera mieux comprise à la lecture de la description de détail qui va suivre.

La compréhension de cette description sera facilitée au vu du dessin joint en annexe illustrant, dans une figure unique, le schéma de principe du fonctionnement d'un dispositif conforme à l'invention, appliqué à un système d'occultation et/ou d'ouverture de type volet roulant, à fonctionnement motorisé.

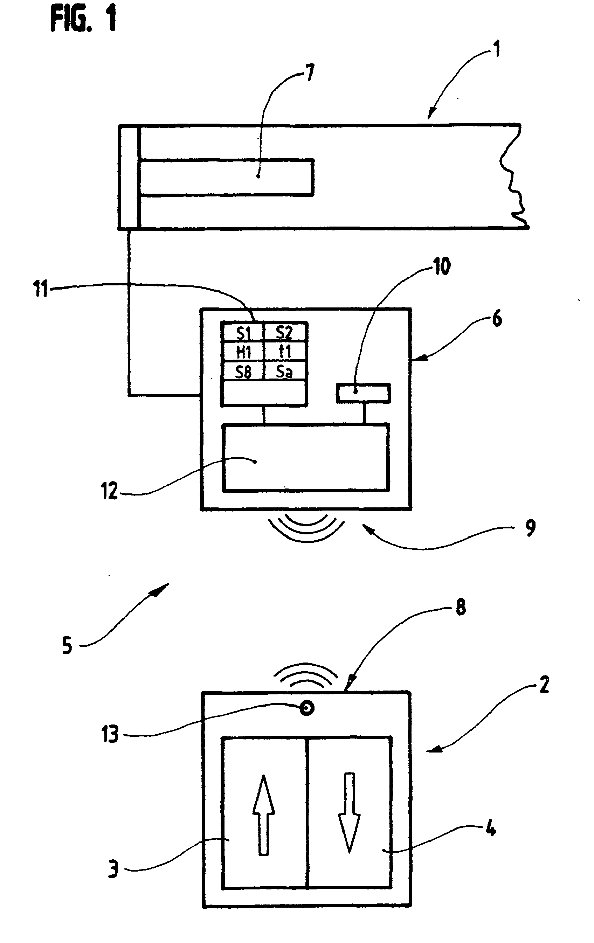

Ainsi, tel que visible, dans cette figure 1, ce système d'occultation et/ou de fermeture, ici représenté sous forme d'un volet roulant, porte la référence 1, tandis qu'il lui est associé une boîtier de contrôle 2 comportant au moins un organe de commande à impulsion, préférentiellement deux repères 3 et 4, pour la commande d'ouverture et de fermeture dudit système ou volet roulant 1.

En fin de compte, l'invention a trait, plus particulièrement, à un dispositif de programmation horaire 5, destiné à assurer la commande automatique d'ouverture et/ou de fermeture du volet roulant 1 à une heure choisie par l'utilisateur, ceci plus particulièrement pour procéder à de la simulation de présence..

Pour cela ce dispositif de programmation horaire 5 comporte une unité 6 de gestion du fonctionnement du moteur 7 de ce volet roulant 1 à laquelle est relié le boîtier de contrôle 2. A ce propos, cette liaison peut être filaire ou non.

En particulier, il a été représenté dans la figure du dessin ci-joint, une transmission par ondes radio entre le boîtier de contrôle 2 et ladite unité de gestion 6. Dans ces conditions, ledit boîtier 2 comporte un émetteur 8 approprié, tandis que ladite unité de gestion 6 reçoit un récepteur 9.

Cette unité comporte, encore, une horloge 10, sous entendu un moyen pour mesurer et/ou décompter un temps, et une mémoire EEPROM 11 raccordées à un microprocesseur 12.

Celui-ci est plus particulièrement programmé pour reconnaître au moins une séquence d'initialisation déterminée S₁ transmise sous forme d'une suite définie, préenregistrée dans ce microprocesseur 12 ou dans la mémoire EEPROM 11, d'impulsions sur le ou les organes de commande 3, 4 du boîtier de contrôle 2, ceci pour permettre la programmation, par rapport à une heure de référence H₁ et selon la séquence d'initialisation reconnue S1, l'heure de commande d'ouverture ou de fermeture du volet roulant 1.

En fait, cette heure de commande d'ouverture et de fermeture est déterminée par ce microprocesseur 12, comme préalablement indiqué, par rapport à l'heure de référence H₁, ceci en fonction du nombre d'impulsions transmises par l'un au moins des organes de commande 3, 4, après ladite procédure d'initialisation, tenant compte qu'une impulsion correspond à un incrément de temps t₁ d'une durée prédéfinie, notamment connue en mémoire 11, par rapport à ladite heure de référence H₁.

A noter, encore, que l'heure de référence H₁ peut être fixe, par exemple 0 heure. Toutefois l'heure à laquelle intervient la programmation, donc du lancement de la séquence d'initialisation, peut, elle aussi, servir d'heure de référence pour déterminer celle à laquelle doit intervenir un cycle d'ouverture ou de fermeture du volet roulant 1.

De même, il peut être programmé au niveau du microprocesseur 12 ou dans la mémoire 11, au moins deux séquences d'initialisation S₁, S₂ qui se distinguent par des suites partiellement ou totalement différentes d'impulsions à exercer sur le ou les organes de commande 3, 4, ceci de manière à permettre au microprocesseur 12 de distinguer s'il est question d'une heure de programmation d'ouverture ou de fermeture du volet roulant 1.

En fin de compte, l'on peut encore imaginer qu'une séquence d'initialisation unique amène le microprocesseur 12 dans une position d'attente de programmation de l'heure d'ouverture ou de fermeture du volet roulant 1, la commande (d'ouverture ou de fermeture) concernée étant déterminée au travers d'une seconde séquence d'impulsions sur le ou les organes 3, 4, suivant la séquence d'initialisation.

A titre d'exemple, si l'un des organes de commande 3 du boîtier de contrôle 2 a pour but de commander l'ouverture du volet roulant 1 et, donc, l'autre 4 la fermeture, une impulsion exercée sur l'un de ces organes de commande 3 ou 4, immédiatement après une séquence d'initialisation, vient informer le microprocesseur 12 qu'il est question d'une programmation d'heure d' ouverture ou, respectivement, de fermeture de ce volet roulant 1.

Avantageusement, le dispositif de programmation horaire 5 est encore complété par un dispositif de signalisation visuel et/ou sonore susceptible d'informer l'usager de la bonne réception, par l'unité de gestion de fonctionnement 6, d'une séquence d'initialisation déterminée et/ou d'une impulsion correspondant à un incrément de temps t₁ et/ou d'un fin de cycle de programmation horaire.

Si un tel dispositif de signalisation visuel et/ou sonore peut se présenter, soit sous forme d'un ou plusieurs voyants de couleur ou encore d'un bipeur, il sera défini, préférentiellement, par le système d'occultation et/ou de fermeture, lui-même, en l'occurrence le volet roulant.

Ainsi, l'acquiescement de la bonne réception d'une séquence d'initialisation d'une impulsion correspondant à un incrément de temps t₁ ou d'un fin de cycle de programmation pourra se faire par la commande, par l'unité de gestion 6, d'un cycle de fonctionnement défini dudit volet roulant, par exemple par une légère descente suivie d'une remontée d'amplitude identique de ce volet roulant.

Avantageusement, le microprocesseur est programmé pour appliquer à l'heure programmée d'ouverture ou selon le cas de fermeture du volet roulant, après un nombre défini d'impulsions sur l'un ou l'autre des organes de commande 3, 4, une variable de temps aléatoire, en moins ou en plus, ceci à chaque cycle d'ouverture, respectivement, de fermeture. Préférentiellement, cette variable de temps aléatoire est inférieure au temps d'incrémentation t₁.

En fin de compte, dans le cadre d'une simulation de présence, le microprocesseur vient commander chaque jour l'ouverture et la fermeture d'un volet roulant à des heures variables, tout en étant comprises dans des plages définies autour des heures d'ouverture et de fermeture préalablement programmées. Il est évident que dans un tel contexte de simulation de présence, le caractère variable, des heures d'ouverture et de fermeture des volets roulants, tout en étant maîtrisées, présente un avantage incontestable.

Selon un protocole préférentiel du fonctionnement du dispositif de programmation horaire 5, selon l'invention, l'on a imaginé une séquence d'initialisation unique consistant à exercer, simultanément, sur les deux organes de commande 3, 4 une ou plusieurs impulsions d'une durée déterminée, éventuellement aptes à être validées au travers d'un voyant 13 sur le boîtier de contrôle 2. De manière à éviter une entrée intempestive dans le cycle de programmation horaire, entre deux impulsions exercées sur les deux organes de commande 3, 4, il est prévu, selon le protocole, de respecter un temps d'attente d'une durée déterminée dont peut rendre compte, là encore, le voyant 13. En particulier, ce voyant 13 peut rester allumé ou clignoter pendant cette durée de manière à indiquer précisément à l'usager, qu'il doit attendre avant de poursuivre la programmation. En fait, le protocole peut, ainsi, prévoir qu'au cours d'un cycle de programmation, il est nécessaire de respecter un ou plusieurs temps d'arrêt de durée visualisée par le voyant 13 pour éviter toute programmation involontaire.

Cette séquence d'initialisation est ensuite acquittée par un dispositif de signalisation visuel et/ou sonore, en particulier par le volet roulant dont le tablier vient effectuer une brève montée suivie d'une descente d'amplitude similaire sous l'impulsion de l'unité de gestion 6.

S'en suit, selon le protocole conforme à l'invention, la programmation de l'heure d'ouverture ou de fermeture de ce volet roulant, en exerçant le nombre d'impulsions qu'il convient ceci par rapport à l'heure de référence H₁, sur l'organe de commande d'ouverture 3, s'il s'agit d'une programmation à l'ouverture de ce volet roulant 1, ou sur l'organe de commande 4, lorsqu'il s'agit de programmer l'heure de fermeture. Là encore à chaque réception par l'unité de gestion 6 d'un signal correspondant à une impulsion sur un tel organe de commande 3 ou 4, destinée à incrémenter d'une durée t₁, l'heure d'ouverture, respectivement, de fermeture, le volet roulant, au travers de son tablier, peut émettre un signal d'acquiescement.

Avantageusement, le microprocesseur 12 est programmé pour reconnaître, encore, une commande de fin de cycle de programmation consistant en une séquence d'impulsions Sf, connue en mémoire 11 ou au niveau du microprocesseur 12, exercée sur l'un et/ou l'autre des organes de commande 3, 4. Préférentiellement, cette séquence d'impulsions de fin de cycle Sf consiste en au moins une impulsion exercée sur l'organe de commande, respectivement 4 ou 3, suite à une programmation d'une heure d'ouverture ou de fermeture effectuée au travers de l'autre organe de commande, respectivement 3, 4.

Comme déjà indiqué ci-dessus, cette fin de cycle de programmation peut être acquittée au travers du dispositif de signalisation visuel et/ou sonore que définit, préférentiellement le volet roulant, lequel peut, là encore, effectuer une brève montée suivie d'une brève descente ou inversement.

Par ailleurs, le microprocesseur 12 est préprogrammé pour sortir, automatiquement, du mode de programmation si, au cours de ce dernier, celui-ci est interrompu pendant une durée prédéfinie.

Finalement, il est enregistré dans cette dernière ou dans le microprocesseur 12, une séquence Sa d'annulation de fonctionnement automatisé du volet roulant 1 à des heures d'ouverture et de fermeture préprogrammées.

En fin de compte, suite à cette séquence d'annulation Sa consistant, là encore, en un cycle d'impulsions prédéfini exercée sur le ou les organes de commande 3, 4, l'unité de gestion de fonctionnement 6 est informée, au travers du microprocesseur 12, ayant reconnu ladite séquence, que le volet roulant 1 est en fonctionnement manuel, c'est à dire que son ouverture ou sa fermeture dépend des actions directement exercées par l'usager sur les organes de commande 3, 4.

Selon un protocole préférentiel, cette séquence d'annulation Sa consiste en une impulsion ou une succession d'impulsions exercées, simultanément, sur les organes de commande 3, 4, pendant une durée prédéfinie, éventuellement validée au travers du voyant 13 sur le boîtier de contrôle 2. Là encore, il peut être prévu qu'entre ces impulsions, il soit nécessaire de respecter des temps d'interruption.

Comme cela ressort de la description qui précède, la présente invention vient répondre, de manière avantageuse et, surtout peu coûteuse, au problème de la gestion automatisée et individuelle de systèmes d'occultation et/ou de fermetures motorisés, de type volet roulant.

## Revendications

1. Dispositif de programmation horaire de commande, de fermeture et/ou d'ouverture d'un système d'occultation ou similaire du type volet roulant (1), à fonctionnement motorisé, comportant un boîtier de contrôle (2), regroupant au moins un organe de commande à impulsion (3, 4) de préférence deux, pour la commande d'ouverture et/ou de fermeture dudit système (1), **caractérisé par le fait qu'**il comporte, encore, une unité (6) de gestion du fonctionnement du moteur (7) du système (1) à laquelle est relié le boîtier de contrôle (2), de manière filaire ou non, et intégrant au moins une horloge (10) et une mémoire EEPROM (11) raccordée à un microprocesseur (12) programmé pour reconnaître au moins une séquence d'initialisation (S₁) déterminée, transmise sous forme d'une suite définie d'impulsions sur le ou les organes de commande (3, 4) du boîtier de contrôle (2) et pour permettre la programmation, par rapport à une heure de référence (H₁) et selon la séquence d'initialisation (S₁) reconnue, l'heure de commande d'ouverture et/ou de fermeture du système (1) en fonction du nombre d'impulsions transmises par l'un au moins des organes de commande (3, 4), après la procédure d'initialisation (S₁), chaque impulsion correspondant à un incrément par rapport à l'heure de référence (H₁) d'un temps (t₁) d'une durée prédéfinie, connue en mémoire (11).

2. Dispositif de programmation horaire selon la revendication 1, **caractérisé par le fait que** l'heure de référence (H₁) est une heure fixe.

3. Dispositif de programmation horaire selon la revendication 1, **caractérisé par le fait que** l'heure de référence (H₁) est l'heure à laquelle intervient la programmation, à savoir l'heure de lancement de la séquence d'initialisation.

4. Dispositif de programmation horaire selon l'une quelconque des revendications précédentes, **caractérisé par le fait que** le microprocesseur (12) est défini apte à reconnaître une seconde séquence d'impulsions émise au travers du ou des organes de commande (3, 4) après la séquence d'initialisation (S₁) pour reconnaître une programmation d'heure d'ouverture ou de fermeture du système (1).

5. Dispositif de programmation horaire selon l'une quelconque des revendications précédentes, **caractérisé par le fait qu'**il comporte un dispositif de signalisation visuelle et/ou sonore susceptible d'informer l'usager de la bonne réception, par l'unité de gestion (6), d'une séquence d'initialisation déterminée et/ou d'une impulsion correspondant à un incrément de temps (t₁) et/ou d'un fin de cycle de programmation horaire.

6. Dispositif de programmation horaire selon la revendication 5, **caractérisé par le fait que** le dispositif de signalisation visuelle et/ou sonore est défini par le système (1) lui-même, auquel il est communiqué un cycle de fonctionnement défini par l'unité de gestion (6) en tant qu'acquiescement de la bonne réception d'une séquence d'initialisation et/ou d'une fin de cycle de programmation et/ou d'une impulsion correspondant à un incrément de temps (t₁).

7. Dispositif de programmation horaire selon l'une quelconque des revendications précédentes, **caractérisé par le fait que** le microprocesseur (12) est programmé pour reconnaître une séquence d'impulsions de fin de cycle (sf) transmise par le ou les organes de commande (3, 4) en fin de programmation.

8. Dispositif de programmation horaire selon l'une quelconque des revendications précédentes, **caractérisé par le fait que** le microprocesseur (12) est programmé pour reconnaître une séquence (Sa) d'annulation du mode de fonctionnement automatisé du système (1) à des heures d'ouverture et de fermeture préprogrammées.

9. Dispositif de programmation horaire selon l'une quelconque des revendications précédentes, **caractérisé par le fait qu'**il est appliqué à l'heure programmée d'ouverture ou, selon le cas, de fermeture, une variable de temps aléatoire, en moins ou en plus, à chaque cycle d'ouverture, respectivement, de fermeture.

10. Dispositif de programmation horaire selon la revendication 9, **caractérisé par le fait que** la variable de temps aléatoire est inférieure au temps d'incrémentation (t₁).

11. Dispositif de programmation horaire selon l'une quelconque des revendications précédentes, **caractérisé par le fait que** le boîtier de contrôle (2) comporte un voyant (13) apte à valider la ou les impulsions sur le ou les organes de commande (3, 4) et/ou apte à signaler un temps d'interprétation à respecter en cours de programmation.

12. Protocole de fonctionnement du dispositif de programmation horaire selon l'une quelconque des revendications précédentes, **caractérisé par le fait que** :
- on lance, au travers du boîtier de contrôle (2), une séquence d'initialisation unique consistant à exercer, simultanément, sur les deux organes de commande (3, 4), une ou plusieurs impulsions d'une durée déterminée ;
- cette séquence d'initialisation est acquittée par un dispositif de signalisation visuelle et/ou sonore ;
- on procède à la programmation de l'heure d'ouverture ou de fermeture du système (1), en exerçant le nombre d'impulsions qu'il convient, ceci par rapport à l'heure de référence (H₁), sur l'organe de commande d'ouverture (3), s'il s'agit d'une programmation à l'ouverture de ce système (1) ou sur l'organe de commande (4) s'il s'agit de programmer l'heure de fermeture ;
- on lance la séquence d'impulsions de fin de cycle de programmation (sf) consistant en au moins une impulsion exercée sur l'organe de commande, respectivement (4 ou 3), suite à une programmation d'une heure d'ouverture ou de fermeture effectuée au travers de l'autre organe de commande, respectivement (3) ou (4).

13. Protocole de fonctionnement du dispositif de programmation horaire, selon la revendication 12, **caractérisé par le fait que** la sortie du mode de programmation horaire intervient automatiquement, si au cours de ce dernier, il y a interruption pendant une durée prédéfinie.

14. Protocole selon l'une quelconque des revendications 12 ou 13, **caractérisé par le fait que** pour l'annulation du mode de fonctionnement automatisé du système (1) à des heures d'ouverture et de fermeture préprogrammées, il est procédé à une séquence d'annulation (sa) sous forme d'une impulsion ou d'une succession d'impulsions exercées simultanément sur les organes de commande (3, 4) pendant une durée prédéfinie.

15. Protocole selon l'une quelconque des revendications 12 à 14, **caractérisé par le fait qu'**il est prévu, de respecter, en cours de programmation, des temps d'arrêt de durée visualisée par un voyant (13).

## Patentansprüche

1. Zeitprogrammierungsvorrichtung zur Steuerung der Schließung und/oder Öffnung eines Verdunkelungsystems oder dergleichen der Art motorisierter Rolladen (1), umfassend einen Kontrollkasten (2), gruppierend wenigstens ein Impulssteuerungsorgan (3, 4), vorzugsweise zwei, für die Steuerung der Öffnung und/oder Schließung des besagten Systems (1), **dadurch gekennzeichnet, daß** sie noch eine Anlage (6) für die Verwaltung des Funktionierens vom Motor (7) des Systems (1) umfaßt, mit dem der Kontrollkasten (2) durch Verdrahtung oder ohne Verdrahtung verbunden ist, und integrierend wenigstens eine Uhr (10) und einen EEPROM Speicher (11), der mit einem Mikroprozessor (12) verbunden ist, der programmiert ist, um wenigstens eine bestimmte Initialisierungssequenz (S1), die in Form von einer Impulsfolge auf dem oder den Steuerungsorganen (3, 4) des Kontrollkastens (2) übertragen wird, zu erkennen und die Programmierung, hinsichtlich einer Bezugszeit (H1) und gemäß der erkannten Initialisierungssequenz (S1), der Zeit zur Steuerung der Öffnung und/oder Schließung des Systems (1) in Abhängigkeit von der Anzahl der Impulse zu erlauben, die wenigstens durch das eine der Steuerungsorgane (3, 4) nach dem Initialisierungsverfahren (S1) übermittelt werden, wobei jeder Impuls einem Inkrement hinsichtlich der Bezugszeit (H1) von einer Zeit (t1) mit vorbestimmter Dauer entspricht, die im Speicher (11) eingetragen ist.

2. Zeitprogrammierungsvorrichtung nach Anspruch 1, **dadurch gekennzeichnet, daß** die Bezugszeit (H1) eine festgelegte Zeit ist.

3. Zeitprogrammierungsvorrichtung nach Anspruch 1, **dadurch gekennzeichnet, daß** die Bezugszeit (H1) die Zeit ist, zu der die Programmierung erfolgt, nämlich die Zeit der Einleitung der Initialisierungssequenz.

4. Zeitprogrammierungsvorrichtung nach irgendeinem der vorgehenden Ansprüche, **dadurch gekennzeichnet, daß** der Mikroprozessor (12) geeignet vorgesehen ist, um eine zweite Impulsensequenz zu erkennen, die durch das oder die Steuerungsorgane (3, 4) nach der Initialisierungssequenz (S1) ausgesandt wird, um eine Programmierung der Zeit zur Öffnung und/oder Schließung des Systems (1) zu erkennen.

5. Zeitprogrammierungsvorrichtung nach irgendeinem der vorgehenden Ansprüche, **dadurch gekennzeichnet, daß** sie eine Vorrichtung zur sichtbaren und/oder hörbaren Signalisierung umfaßt, geeignet, den Benutzer über den guten Empfang durch die Verwaltungsanlage (6) einer bestimmten Initialisierungssequenz und/oder eines Impulses zu informieren, der einem Zeitinkrement (t1) und/oder einem Ende des Zyklus der Zeitprogrammierung entspricht.

6. Zeitprogrammierungsvorrichtung nach Anspruch 5, **dadurch gekennzeichnet, daß** die Vorrichtung zur sichtbaren und/oder hörbaren Signalisierung durch das System (1) selbst gebildet ist, an das ein Betriebszyklus durch die Steuerungsanlage (6) als Bestätigung des guten Empfangs einer Initialisierungssequenz und/oder eines Endes des Programmierungszyklus und/oder eines Impulses, der einem Zeitinkrement (t1) entspricht, mitgeteilt wird.

7. Zeitprogrammierungsvorrichtung nach irgendeinem der vorgehenden Ansprüche, **dadurch gekennzeichnet, daß** der Mikroprozessor (12) programmiert ist, um eine Impulsensequenz für das Zyklusende (Sf) zu erkennen, die durch das oder die Steuerungsorgane (3, 4) am Ende der Programmierung übertragen wird.

8. Zeitprogrammierungsvorrichtung nach irgendeinem der vorhergehenden Ansprüche, **dadurch gekennzeichnet, daß** der Mikroprozessor (12) programmiert ist, um eine Sequenz (Sa) zur Annullierung der automatisierten Arbeitsweise des Systems (1) bei vorprogrammierten Zeiten der Öffnung und der Schließung zu erkennen.

9. Zeitprogrammierungsvorrichtung nach irgendeinem der vorhergehenden Ansprüche, **dadurch gekennzeichnet, daß** auf die programmierten Zeit der Öffnung oder, je nach dem Fall, der Schließung bei jedem Zyklus der Öffnung, beziehungsweise der Schließung eine mehr oder weniger zufällige Zeitvariable angewendet wird.

10. Zeitprogrammierungsvorrichtung nach Anspruch 9, **dadurch gekennzeichnet, daß** die zufällige Zeitvariable kleiner ist als die Inkrementationszeit (t1).

11. Zeitprogrammierungsvorrichtung nach irgendeinem der vorgehenden Ansprüche, **dadurch gekennzeichnet, daß** der Kontrollkasten (2) eine Anzeigelampe (13) umfaßt, fähig, den bzw. die Impulse in dem oder in den Steuerungsorganen (3, 4) zu validieren, und/oder fähig, eine im Laufe der Programmierung zu berücksichtigende Interpretationszeit zu signalisieren.

12. Betriebsprotokoll für die Zeitprogrammierungsvorrichtung nach irgendeinem der vorgehenden Ansprüche, **dadurch gekennzeichnet, daß**:
- durch den Kontrollkasten (2) eine einmalige Initialisierungssequenz eingeleitet wird, die darin besteht, auf den beiden Steuerungsorganen (3, 4) einen oder mehrere Impulse mit einer bestimmten Dauer gleichzeitig auszuüben,
- diese Initialisierungssequenz durch eine Vorrichtung zur sichtbaren und/oder hörbaren Signalisierung bestätigt wird,
- die Programmierung der Zeit der Öffnung oder Schließung des Systems (1) durchgeführt wird, indem die erforderliche Anzahl von Impulsen, und zwar hinsichtlich der Bezugszeit (H1), auf das Steuerungsorgan der Öffnung 3 ausgeübt wird, wenn es sich um eine Programmierung der Öffnung dieses Systems (1) handelt, oder auf das Steuerungsorgan (4), wenn es sich darum handelt, die Zeit der Schließung zu programmieren,
- die Impulssequenz des Zyklusendes (Sf) eingeleitet wird, die wenigstens aus einem Impuls besteht, der auf das Steuerungsorgan, bzw. 4 oder 3, ausgeübt wird, infolge einer Programmierung einer Zeit der Öffnung oder Schließung, die durch das Steuerungsorgan, bzw. 3 oder 4, durchgeführt ist.

13. Betriebsprotokoll für die Zeitprogrammierungsvorrichtung nach Anspruch 12, **dadurch gekennzeichnet, daß** das Verlassen der Arbeitsweise zur Zeitprogrammierung automatisch erfolgt, wenn es im Laufe dieser Letzteren eine Unterbrechung während einer vorbestimmten Dauer gibt.

14. Protokoll nach irgendeinem der Ansprüche 12 oder 13, **dadurch gekennzeichnet, daß** für die Annullierung der automatisierten Arbeitsweise des Systems (1) zu vorprogrammierten Zeiten der Öffnung und Schließung eine Annullierungssequenz (Sa) in Form von einem Impuls oder von einer Impulsenfolge ausgeführt wird, die gleichzeitig auf die Steuerungsorgane (3, 4) während einer vorbestimmten Dauer ausgeübt werden.

15. Protokoll nach irgendeinem der Ansprüche 12 bis 14, **dadurch gekennzeichnet, daß** vorgesehen ist, im Laufe der Programmierung Sperrzeiten einer von einer Anzeigelampe (13) veranschaulichten Dauer zu berücksichtigen.

## Claims

1. Time programming device for controlling the closing and/or the opening of a shading or similar system such as a motorised roller blind (1), comprising a control box (2), grouping at least one impulse-control organ (3, 4), preferably two, for controlling the opening and/or closing of said system (1), **characterised in that** it also includes a control unit (6) for the operation of the motor (7) of the system (1) to which the control box (2) is connected, by cable or not, and integrating at least a clock (10) and an EEPROM memory (11) connected to a microprocessor (12) programmed so as to recognise at least a determined initialisation sequence (S1), transmitted in the form of a defined succession of impulses on the control organ or organs (3, 4) of the control box (2), and to allow to program, with respect to a reference time (H1) and according to the recognised initialisation sequence (S1), the time for controlling the opening and/or closing of the system (1) depending on the number of impulses transmitted by at least one of the control units (3, 4), after the initialisation process (S1), each impulse corresponding to an increment, with respect to the time of reference (H1), by a time (t1) of a preset duration, known in the memory (11).

2. Time programming device according to claim 1, **characterised in that** the time of reference (H1) is a fixed time.

3. Time programming device according to claim 1, **characterised in that** the time of reference (H1) is the time at which the programming occurs, namely the time of launching of the initialisation sequence.

4. Time programming device according to any of the preceding claims, **characterised in that** the microprocessor (12) is designed capable of recognising a second sequence of impulses transmitted through the control organ or organs (3, 4) after the initialisation sequence (S1) to recognise a programmed time for the opening or closing of the system (1).

5. Time programming device according to any of the preceding claims, **characterised in that** it includes a visual and/or sound signalling device capable of informing the user of the good reception, by the control unit (6), of a determined initialisation sequence and/or of an impulse corresponding to a time increment (t1) and/or an end of time programming cycle.

6. Time programming device according to claim 5, **characterised in that** the visual and/or sound signalling device is defined by the system (1) itself, to which is communicated an operating cycle defined by the control unit (6) as a acknowledgement of good reception of an initialisation sequence and/or of an end of programming cycle and/or of an impulse corresponding to a time increment (t1).

7. Time programming device according to any of the preceding claims, **characterised in that** the microprocessor (12) is programmed so as to recognise a sequence of impulses of an end of cycle (Sf) transmitted by the control organ or organs (3, 4) at the end of the programming.

8. Time programming device according to any of the preceding claims, **characterised in that** the microprocessor (12) is programmed so as to recognise a sequence (Sa) for cancelling the automated operating mode of the system (1) at pre-programmed opening and closing times.

9. Time programming device according to any of the preceding claims, **characterised in that** to the programmed time of opening or, as the case may be, of closing, is applied a random time variable, in less or more, at each opening or closing cycle, respectively.

10. Time programming device according to claim 9, **characterised in that** the random time variable is smaller than the time of incrementing (t1).

11. Time programming device according to any of the preceding claims, **characterised in that** the control box (2) includes a signal lamp (13) capable of validating the impulse or impulses on the control organ or organs (3, 4) and/or capable of signalling an interpretation time to be respected during the programming.

12. Operating protocol for the time programming device according to any of the preceding claims, **characterised in that**:
- through the control box (2) is launched a unique initialisation sequence consisting in exerting, simultaneously, on both control organs (3, 4), one or more impulses of a determined duration ;
- this initialisation sequence is acknowledged by a visual and/or sound signalling device ;
- the programming of the opening or closing time of the system (1) is proceeded to by exerting the adequate number of impulses, this with respect to the reference time (H1), on the organ for controlling the opening (3), in the case of programming the opening of this system (1), or on the control organ {4) in the case of programming the closing time ;
- the sequence of impulses of the end of programming cycle (Sf) is launched, consisting of at least one impulse exerted on the control organ, respectively (4 or 3), following a programming of an opening or closing time carried out through the other control organ, respectively (3) or (4).

13. Operating protocol for the time programming device, according to claim 12, **characterised in that** the exit from the time programming mode occurs automatically when during the latter occurs an interruption for a preset period of time.

14. Protocol according to any of claims 12 or 13, **characterised in that** for cancelling the automated operating mode of the system (1) at pre-programmed opening and closing times, a cancellation sequence (Sa) in the form of an impulse or of a succession of impulses exerted simultaneously on the control organs (3, 4) for a preset period of time is proceeded to.

15. Protocol according to any of claims 12 to 14, **characterised in that** it is foreseen to respect, during programming, stopping times of a duration visualised by a signal lamp (13).
